# EUROPEAN PATENT APPLICATION

(11) **EP 1 738 850 A1**
(43) Date of publication of application: **03.01.2007**
(21) Application number: 06356077.5
(22) Date of filing: 27.06.2006
(51) Int. Cl.: B23D 47/08, B27B 27/10, B23D 47/02, B23D 45/04, B23D 45/06, B23D 59/00

(54) **Bench-top power tool**

(30) Priority: 28.06.2005 CN 200510040845; 30.12.2005 CN 200520140629; 26.08.2005 CN 200520075003; 28.06.2005 CN 200520073194
(71) Applicant: Positec Power Tools (Suzhou) Co., Ltd., Suzhou 215006, Jiangsu (CN)
(72) Inventor: Xin, Wang, Suzhou Jiangsu (CN); Shadong, Chen, Suzhou Jiangsu (CN); Gianni, Borinato, 36015 Scaio (IT); Liren, Wang, Suzhou Jiangsu (CN); Xuejun, Zhou, Suzhou Jiagsu (CN)
(74) Representative: Jeannet, Olivier

(57) **Abstract**

The bench-top power tool, comprises:
a base unit (100);
a movable part unit (102) connected to the base unit (100), capable of moving in relation to the base unit (100);
a primary motor (104) connected to the base unit (100), rotating a blade (108) to cut a workpiece; and
a movement-adjusting motor (106) connected to the base unit (100) and controlled by an open control mechanism, driving the movable part unit (102) to generate a relative motion in relation to the base unit (100).

## Description

### Field of the Invention

The present invention relates to a power tool, and more particularly to a bench-top power tool having at least one movement-adjusting motor for driving movable part unit wherein the bench-top power tool is applicable to a miter saw machine and a bench-top saw machine.

### Background of the Invention

Currently, the position adjustment between working parts applied to the bench tool, such as a bevel cutting tool, is widely done by handling a mechanical adjusting mechanism or a position-adjusting device. Generally speaking, both the position-adjusting device and a locking device are concurrently moved to adjust and lock on the desired position. US Patent No. 6,532,853 B1 issued on March 18, 2003 discloses a table-top cutting machine. A turntable is also provided and is rotatably supported by the base. A bevel arm is located on the turntable and pivotally connected behind the turntable. A forward extending area is located in the turntable and has a control shaft. The control shaft can be locked or released by controlling the relative position of the linkage shaft in relation to the base. A stopping and locking mechanism controls the relative positions of the turntable to the base to lock or release. By holding the control shaft of the table-top cutting machine during position adjustment, the swing arm is swung in rotational angels relative to the base or the turntable and a position fine-tune mechanism is utilized to control the position adjustment. Because a pure mechanical position adjusting device is employed, the adjusting procedure is complicated and time-consuming, therefore the position release and lock are quite complicated. Furthermore, such a bench tool is extremely troublesome and inconvenient to manipulate. Additionally, CN Patent publication No. 1253866 discloses a bevel table-top cutting machine having a position control manipulating mechanism including a plurality of servo-system. The servo-system uses a servo motor. However, the manufacturing cost is high so that the bevel table-top cutting machine is not suitable for current application in the art.

Consequently, there is a need to develop a bench-top power tool to solve the above-mentioned problems.

### Summary of the Invention

One objective of the present invention is to provide a bench-top power tool having at least one movement-adjusting motor with an open control mechanism featuring preferred operability, and cost-effectiveness.

Another objective of the present invention is to provide a bench-top power tool having at least one movement-adjusting motor. While a fast control switch is turned, a continuous signal is outputted into the movement-adjusting motor to drive rapidly the movement-adjusting motor, and while a slow control switch is turned, a discrete signal is outputted into the movement-adjusting motor to drive slowly the movement-adjusting motor.

According to the above objectives, the present invention sets forth a bench-top power tool including a miter saw machine and a bench-top saw machine. The bench-top power tool comprises a base unit, a movable part unit, a primary motor and a movement-adjusting motor. The movable part unit connected to the base unit is capable of moving in relation to the base unit. The primary motor connected to the base unit is used to rotate a blade for cutting a workpiece. The movement-adjusting motor connected to the base unit and controlled by an open control mechanism, driving the movable part unit to generate a relative motion in relation to the base unit.

Preferably, the movement-adjusting motor is connected to the movable part unit via a transmission assembly device. The bench-top power tool further comprises a signal-transforming device for receiving an input signal wherein the signal-transforming device transforms the input signal into a driving signal to drive the movement-adjusting motor. More importantly, the signal-transforming device transforms the input signal into either a continuous or discrete signal and outputs either the continuous or discrete signal into the movement-adjusting motor. Preferably, the movement-adjusting motor is a permanent magnet direct-current (DC) driving motor, a serial motor, a single-phase induction motor, and any combination thereof. That is, the movement-adjusting motor is controlled by an open loop mechanism to reduce cost of the power tool. It should be noted that the bench-top power tool can be a miter saw machine and a bench-top saw machine.

In one embodiment, the signal-transforming device, movement-adjusting motor and transmission assembly device can be positioned together within the same housing of the bench-top power tool. Specifically, the signal-transforming device comprises an input signal control unit and a signal processing unit. The input signal control unit generates the input signal. The signal processing unit is connected to the signal-inputted control unit for receiving the input signal and transforming the input signal into either a continuous or discrete signal and selectively outputs either the continuous or discrete signal into the movement-adjusting motor according to the driving signal. When the movement-adjusting motor receives the driving signal from the signal-transforming device and is then actuated by the driving signal, the transmission assembly device thus drives the movable part unit. While the driving signal is the continuous signal, the movement-adjusting motor actuates the transmission assembly device to continuously move the movable part unit. On the contrary, while the driving signal is the discrete signal, the movement-adjusting motor actuates the transmission assembly device to move the movable part unit in a step-by-step manner.

In one embodiment, the movement-adjusting motor is connected to the movable part unit via a transmission assembly device.

In one embodiment, the movement-adjusting motor is one selected from a group consisting of a permanent magnet direct-current (DC) driving motor, a serial motor and a single-phase induction motor.

In one embodiment, the bench-top power tool further comprises a signal-transforming device for receiving an input signal wherein the signal-transforming device transforms the input signal into a driving signal to drive the movement-adjusting motor.

In one embodiment, the signal-transforming device transforms the input signal into either a continuous or discrete signal and outputs either the continuous or discrete signal into the movement-adjusting motor.

In one embodiment, signal-transforming device comprises an input signal control unit for generating the input signal; and a signal processing unit connected to the signal-inputted control unit for receiving the input signal and transforming the input signal into either a continuous or discrete signal and outputs either the continuous or discrete signal into the movement-adjusting motor.

In one embodiment, the input signal control unit is a control switch and the signal processing unit is a central processing unit connected to the control switch.

In one embodiment, the input signal control unit comprises one of a fast control switch, a slow control switch and the combination.

In one embodiment, while the fast control switch is turned, the central processing unit transforms the input signal into a continuous signal and outputs the continuous signal into the movement-adjusting motor to drive rapidly the movement-adjusting motor, and while the slow control switch is turned, the central processing unit transforms the input signal into a discrete signal and outputs the discrete signal into the movement-adjusting motor to drive slowly the movement-adjusting motor.

In one embodiment, the bench-top power tool is a miter saw machine.

In one embodiment, the miter saw machine further comprises a movable fence wherein the movement-adjusting motor drives the movable fence to generate a relative sliding motion in relation to the base unit.

In one embodiment, the miter saw machine further comprises a bevel arm connected to the blade wherein the movement-adjusting motor drives the bevel arm to generate a relative bevel motion in relation to the base unit.

In one embodiment, the miter saw machine further comprises a turntable connected to the base unit wherein the movement-adjusting motor drives the turntable to generate a relative rotation motion in relation to the base unit.

In one embodiment, the miter saw machine further comprises a supporting device and a saw device connected to a pivot of the supporting device wherein the movement-adjusting motor drives the saw device to rotate the saw device about a pivot of the supporting device in relation to a pivot of the base unit.

In one embodiment, the miter saw machine further comprises a sliding unit and a saw device connected to the sliding unit wherein the movement-adjusting motor drives the saw device to slide in relation to the base unit.

In one embodiment, the bench-top power tool is a bench-top saw machine.

In one embodiment, the bench-top saw machine further comprises a bevel bracket connected to the base unit and the blade wherein movement-adjusting motor drives the bevel bracket to bevel the bevel bracket in relation to the base unit.

In one embodiment, the bench-top saw machine further comprises a bevel bracket connected to the base unit and a bearing board located on the bevel bracket wherein the bearing board is movable in relation to the bevel bracket, and wherein movement-adjusting motor drives the bearing board to generate a relative motion in relation to the base unit.

In comparison with the prior art, the advantages of the present invention generally include: (a) low manufacturing cost; (b) easy to operate; (c) convenient to adjust; and (d) time-saving.

### Brief Description of the Drawings

For better understanding of the preferred embodiments of the present invention, references are made to the accompanying drawings.
FIG. 1 is a block diagram of a bench-top power tool according to one embodiment of the present invention.
FIG. 2 is a discrete signal waveform for driving the movement-adjusting motor according to one embodiment of the present invention.
FIG. 3 is a continuous signal waveform for driving the movement-adjusting motor according to one embodiment of the present invention.
FIG. 4 is a flow chart of performing the central processing unit according to one embodiment of the present invention.
FIG. 5 is a lateral view of a bench-top power tool according to one embodiment of the present invention.
FIG. 6 is a partial vertical view of a bench-top power tool having an enlarged vertical view of a signal-transforming device thereof according to one embodiment the present invention.
FIG. 7 is a control circuit of the signal-transforming device according to one embodiment of the present invention.
FIG. 8 is a partial cross-sectional view of a motion control device for controlling the movement of a bevel arm along line A-A in FIG. 5 according to one embodiment of the present invention.
FIG. 9 is a partial cross-sectional view of a rotation control device for controlling the movement of a turntable along line (B-B) in FIG. 6 according to one embodiment of the present invention.
FIG. 10 is a lateral view of a miter saw machine according to one embodiment of the present invention.
FIG. 11 is a vertical view of the miter saw machine according to one embodiment of the present invention.
FIG. 12 is another partial lateral view in relation to FIG. 10 of a miter saw machine according to one embodiment of the present invention, wherein a movement-adjusting motor pivotally bevels the saw device about a rotation pivot thereof in relation to the base unit according to one embodiment of the present invention.
FIG. 13 is a partial cross-sectional view of the miter saw machine along line (I-I) in FIG. 12 according to one embodiment of the present invention, wherein the movement-adjusting motor pivotally bevels the saw device about a rotation pivot thereof in relation to the base unit.
FIG. 14 is a cross-sectional view of the miter saw machine along line (C-C) in FIG. 11 according to one embodiment of the present invention, wherein the movement-adjusting motor drives a movable fence to generate a relative sliding motion in relation to a fixed fence of the miter saw machine.
FIG. 15 is a cross-sectional view of the miter saw machine along line (D-D) in FIG. 11 according to one embodiment of the present invention, wherein the movement-adjusting motor drives a movable fence to generate a relative sliding motion in relation to a fixed fence of the miter saw machine.
FIG. 16 is a cross-sectional view of the miter saw machine along line (E-E) in FIG. 11 according to one embodiment of the present invention, wherein the movement-adjusting motor drives a movable fence to generate a relative sliding motion in relation to a fixed fence of the miter saw machine.
FIG. 17 is a cross-sectional view of the miter saw machine along line (F-F) in FIG. 11 according to one embodiment of the present invention, wherein the movement-adjusting motor drives a movable fence to generate a relative sliding motion in relation to a fixed fence of the miter saw machine.
FIG. 18 is a cross-sectional view of the miter saw machine along line (G-G) in FIG. 11 according to one embodiment of the present invention, wherein the movement-adjusting motor drives the saw device to slide the saw device by using via a sliding unit, movable on a guiding member, in relation to the base unit.
FIG. 19 is a cross-sectional view of the miter saw machine along line (H-H) in FIG. 12 according to one embodiment of the present invention, wherein the movement-adjusting motor drives the saw device to slide the saw device by using via a sliding unit, movable on a guiding member, in relation to the base unit.
FIG. 20 is a lateral view of a bench-top saw machine according to one embodiment of the present invention.
FIG. 21 is a vertical view of a bench-top saw machine according to one embodiment of the present invention.
FIG. 22is a perspective view of a bench-top saw machine according to one embodiment of the present invention.
FIG. 23 is an upward view of a bench-top saw machine according to one embodiment of the present invention.
FIG. 24 is a cross-sectional view of the miter saw machine along line (J-J) in FIG. 23 according to one embodiment of the present invention.
FIG. 25 is a cross-sectional view of the miter saw machine along line (K-K) in FIG. 24 according to one embodiment of the present invention.
FIG. 26 is another cross-sectional view of the miter saw machine in FIG. 24 according to another embodiment of the present invention.
FIG. 27 is a cross-sectional view of the miter saw machine along line (L-L) in FIG. 25 according to one embodiment of the present invention.
FIG. 28 is a partial front cross-sectional view of the miter saw machine according to one embodiment of the present invention.
FIG. 29 is both partial cross-sectional and front views of the miter saw machine according to one embodiment of the present invention.

### Detailed Description of the Preferred Embodiments

According to the present invention, the bench-top power tool with at least one movement-adjusting motor with an open control mechanism featuring preferred operability, and cost-effectiveness. Furthermore, while the fast control switch is turned, a continuous signal is outputted into the movement-adjusting motor to drive rapidly the movement-adjusting motor. While the slow control switch is turned, a discrete signal is outputted into the movement-adjusting motor to drive slowly the movement-adjusting motor.

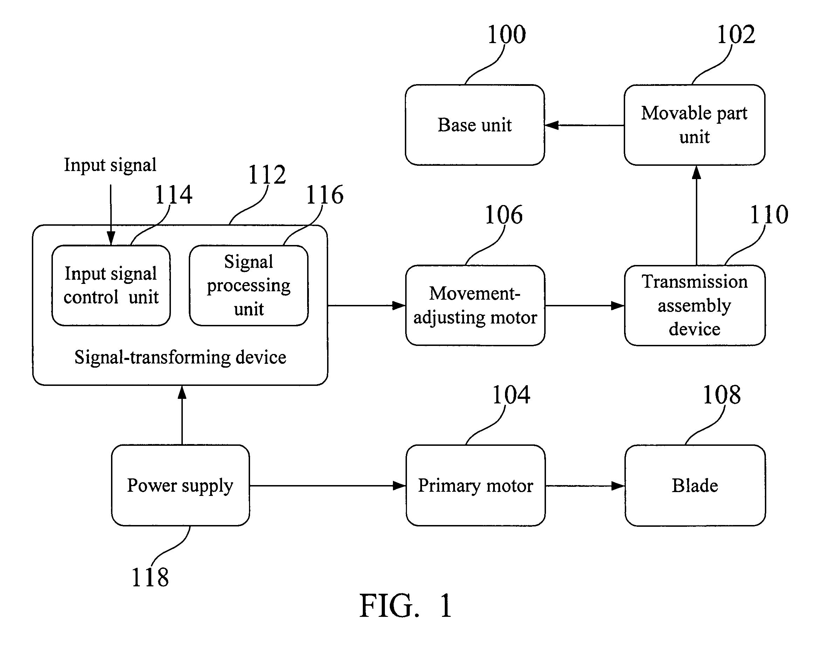

FIG. 1 is a block diagram of a bench-top power tool according to one embodiment of the present invention. The bench-top power tool comprises a base unit 100, a movable part unit 102, a primary motor 104 and a movement-adjusting motor 106. The movable part unit 102 connected to the base unit 100 is capable of moving in relation to the base unit 100. The primary motor 104 connected to the base unit 102 is used to rotate a blade 108 for cutting a workpiece. The movement-adjusting motor 106 connected to the base unit 102 and controlled by an open control mechanism, drives the movable part unit 102 to generate a relative motion in relation to the base unit 100.

Preferably, the movement-adjusting motor 106 is connected to the movable part unit 102 via a transmission assembly device 110. The bench-top power tool further comprises a signal-transforming device 112 for receiving an input signal wherein the signal-transforming device 112 transforms the input signal into a driving signal to drive the movement-adjusting motor 106. More importantly, the signal-transforming device 112 transforms the input signal into either a continuous or discrete signal and outputs either the continuous or discrete signal into the movement-adjusting motor 106. Preferably, the movement-adjusting motor 106 is a permanent magnet direct-current (DC) driving motor, a serial motor, a single-phase induction motor, and any combination thereof. That is, the movement-adjusting motor 106 is controlled by an open loop mechanism to reduce cost of the power tool. It should be noted that the bench-top power tool can be a miter saw machine and a bench-top saw machine. The tools will be illustrated below in details.

In one embodiment, the signal-transforming device 112, movement-adjusting motor 106 and transmission assembly device 110 can be positioned together within the same housing of the bench-top power tool. Specifically, the signal-transforming device 112 comprises an input signal control unit 114 and a signal processing unit 116. The input signal control unit 114 generates the input signal. The signal processing unit 116 is connected to the input signal control unit 114 for receiving the input signal and transforming the input signal into either a continuous or discrete signal and selectively outputs either the continuous or discrete signal into the movement-adjusting motor 106 according to the driving signal. When the movement-adjusting motor 106 receives the driving signal from the signal-transforming device 112 and is then actuated by the driving signal, the transmission assembly device 110 thus drives the movable part unit 102. While the driving signal is the continuous signal, the movement-adjusting motor 106 actuates the transmission assembly device 110 to continuously move the movable part unit 102. On the contrary, while the driving signal is the discrete signal, the movement-adjusting motor 106 actuates the transmission assembly device 110 to move the movable part unit 102 in a step-by-step manner.

In one preferred embodiment of the present invention, the input signal control unit 114 is a control switch and the signal processing unit 116 is a central processing unit connected to the control switch. The input signal control unit 114 comprises a fast control switch and a slow control switch. While the fast control switch is turned, the central processing unit transforms the input signal into a continuous signal and outputs the continuous signal into the movement-adjusting motor to drive rapidly the movement-adjusting motor, and while the slow control switch is turned, the central processing unit transforms the input signal into a discrete signal and outputs the discrete signal into the movement-adjusting motor to drive slowly the movement-adjusting motor 106.

Person skilled in the art should be noted that the transmission assembly device 110 for driving the movable part unit 102 comprises both a gear and a rack, or a worm gear and a corresponding worm shaft to generate the linear movement of the movable part unit 102. Further, the transmission assembly device 110 can be both a gear and a corresponding circular rack for driving the movable part unit 102 in a circular motion.

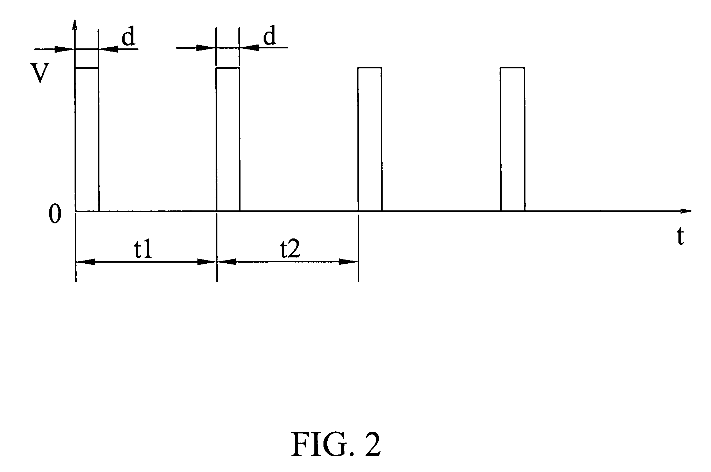

FIG. 2 is a discrete signal waveform for driving the movement-adjusting motor 106 according to one embodiment of the present invention. When the power supply 118 is turned on, a slow control signal is inputted into the input signal control unit 114 and then the signal processing unit 116 processes and outputs the slow control signal into a discrete signal. As shown in FIG. 2, when the signal width (shown as "d") of the discrete signal for driving the movement-adjusting motor 106 is constant or variable, such as 10 ms or arbitrary values, the frequency of the discrete signal is low. In one embodiment, the intervals (shown as "t1" and "t2") of the discrete signal are 500 ms or arbitrary values, and the amplitude (vertical coordinate, "V") of the discrete signal is 24 voltages (V) or arbitrary values in view of time (horizontal coordinate, "t"). It should be noted that the three parameters, discrete signal width, discrete signal interval and amplitude, can be modified, respectively, according to desired requirement so as to adjust the operation status, such as rotation speed, of the movable part unit 102. When the movement-adjusting motor 106 receives and processes the discrete signal outputted from the signal processing unit 116, the transmission assembly device 110 drives the movable part unit 102 such that the movable part unit 102 generates discontinuous periodical movement. Therefore, the user can precisely adjust the movement status of the movable part unit 102.

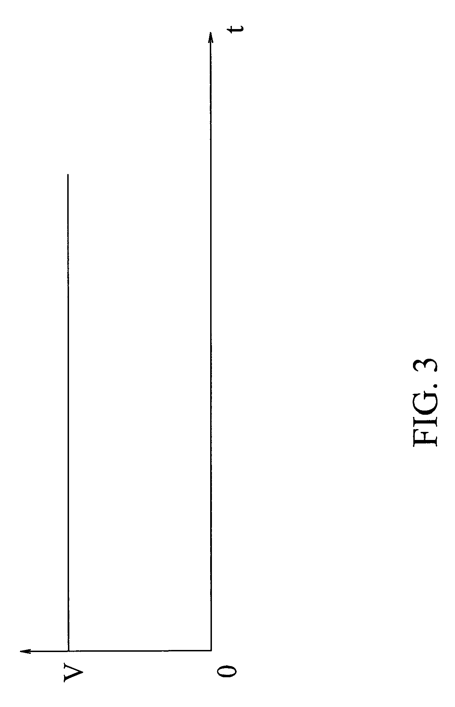

FIG. 3 is a continuous signal waveform for driving the movement-adjusting motor 106 according to one embodiment of the present invention. When the power supply 118 is turned on, a fast control signal is inputted into the input signal control unit 114 and then the processing unit 116 processes the fast control signal to output a continuous signal. As shown in FIG. 3, when the operating voltage for driving the movement-adjusting motor 106 is constant, such as 24 V or arbitrary value, the rotation speeds, such as from 10000 to 12000 (revolutions per minute, rpm), of the movement-adjusting motor 106 is also constant. It should be noted that the parameter, i.e. operating voltage, can be adaptively modified according to desired requirement so as to adjust the operation status, such as rotation speed, of the movable part unit 102. When the movement-adjusting motor 106 receives and processes the continuous signal outputted from the processing unit, the transmission assembly device 110 drives the movable part unit 102 such that the movable part unit 102 generates continuous movement.

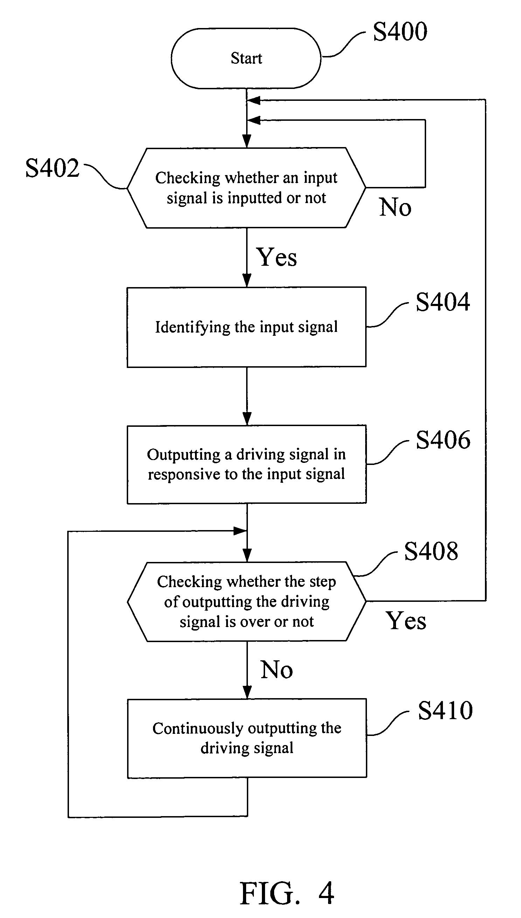

FIG. 4 is a flow chart of performing the central processing unit according to one embodiment of the present invention. In operation, the central processing unit starts to implement a processing program (step S400). When the processing program is implemented, the input signal control unit 114 checks whether an input signal is inputted or not (step S402). If the input signal is inputted into the input signal control unit 114, the central processing unit identifies the input signal (step S404) and then outputs a driving signal in responsive to the input signal (step S406). Then, the signal-transforming checks whether the step of outputting the driving signal is over or not (step S408). If not, the signal-transforming device 112 continuously outputs the driving signal (step S410). Otherwise, return to the step of starting to implement the processing program (step S400). Further, if an input signal is not inputted, return to starting step of the processing program.

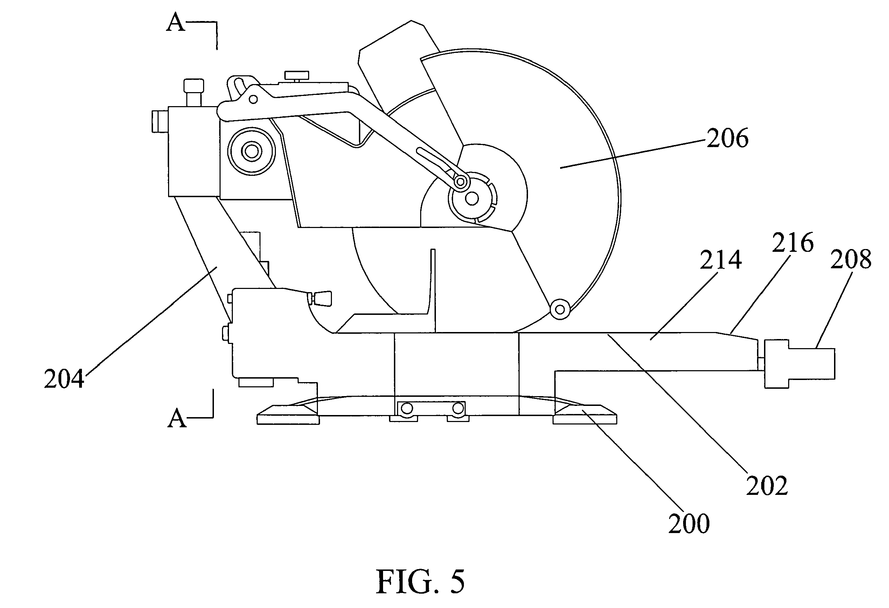

FIG. 5 is a lateral view of a bench-top power tool according to one embodiment of the present invention. The bench-top power tool comprises a base unit 200, a turntable 202 rotating about the central axis of the base unit 200, and a bevel arm 204 pivotally connected behind the rear portion of the turntable 202. In the present invention, both the turntable 202 and the bevel arm 204 serve as the movable part unit (shown in FIG. 1) 102. A signal-transforming device 216 controls the fast or slow bevel movement of the bevel arm 204 about the base unit 200. A working part 206, such as a saw device, is pivotally connected to the end portion of the bevel arm 204. An extending area 214 of a front portion of the movable part unit comprises the control switch. One end portion of the extending area 214 is connected to a locking knob 208 for locking the turntable 202. Because the position of the turntable 202 is far from the working part 206, users can easily operate the bench-top power tool to avoid injuries to the users. Furthermore, the users can advantageously control and adjust the bevel arm 204 and turntable 202 when standing in front of the turntable 202. It is not necessary to go behind the turntable 202 or lateral side of the turntable 202 to control and lock the bevel arm 204 beneficially.

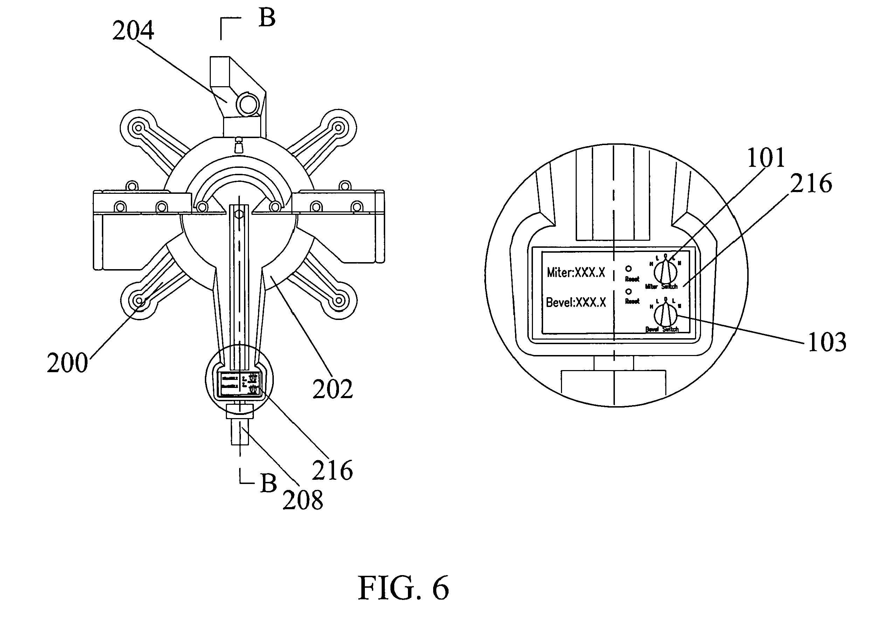

FIG. 6 is a partial vertical view of a bench-top power tool having an enlarged vertical view of a signal-transforming device 216 thereof according to one embodiment of the present invention. The signal-transforming device comprises at least one control switch (101, 103) and a control circuit coupled to the control switches (101, 103). The control switch (101, 103), such as a turning button switch, is used to control the position of the bevel arm 204 and the control switches (101, 103), such as a turning button switch, to control the position of the turntable 202. In one embodiment of the present invention, the control switch (101 or 103) is a reversible switch, a fast switch, a slow switch or any combination thereof. When the control switch (101 or 103) is in position "0", the control switch (101 or 103) is in a close status. When the control switch (101 or 103) is in position "H" which is located in the left side of the position "0", the bevel arm 204 rapidly rotates toward the left side. When the control switch (101 or 103) is in position "H" which is located in the right side of the position "0", the bevel arm 204 rapidly rotates toward the right side. When the control switch (101 or 103) is in position "L" which is located in the left side of the position "0", the bevel arm 204 slowly rotates toward the left side. When the control switch is in position "L" which is located in the right side of the position "0", the bevel arm 204 slowly rotates toward the right side.

Similarly, the control switch (101 or 103) is a reversible switch, a fast switch, a slow switch or any combination thereof. When the control switch (101 or 103) is in position "0", the control switch (101 or 103) is in a close status. When the control switch (101 or 103) is in position "H" which is located in the left side of the position "0", the bevel arm 204 rapidly rotates toward the left side. When the control switch (101 or 103) is in position "H" which is located in the right side of the position "0", the bevel arm 204 rapidly rotates toward the right side. When the control switch (101 or 103) is in position "L" which is located in the left side of the position "0", the bevel arm 204 slowly rotates toward the left side. When the control switch (101 or 103) is in position "L" which is located in the right side of the position "0", the bevel arm 204 slowly rotates toward the right side.

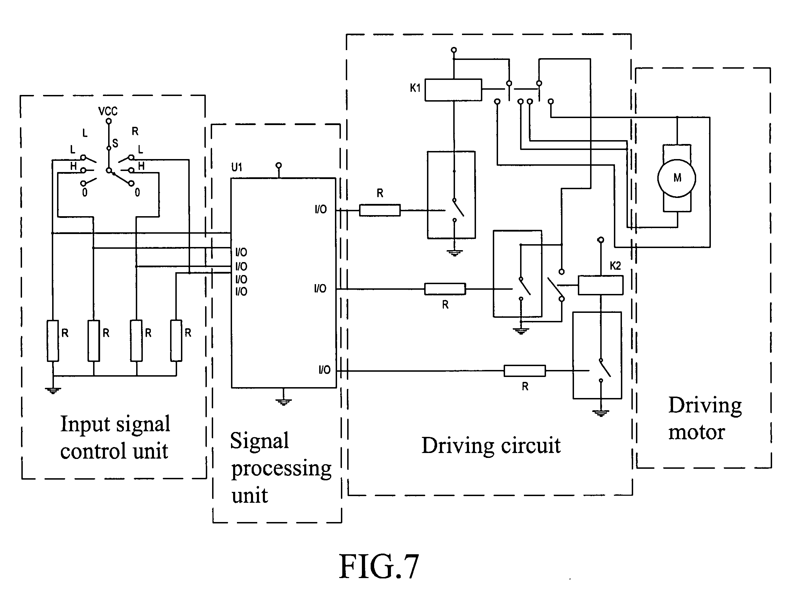

FIG. 7 is a control circuit of the signal-transforming device to perform position adjustment of the bench-top power tool according to one embodiment of the present invention. The control circuit comprises an input signal control unit, an input signal control unit and a processing unit, a driving unit and a driving motor. The signal-inputted circuit is supplied with a power circuit (shown in "VCC"), such as a battery, a DC power generated by a rectified and filtered AC power. The turning button switch "S" can be turned to the fast dial position "H" or the slow dial position "L" of the left side "LS". On the contrary, the turning button switch "S" can be turned to the fast dial position "H" or to the slow dial position "L" of the right side "RS". The turning button switch "S" can be also turned to the position "0" by the user according to the desired control status. Such a situation is not repeated again.

When the turning button switch "S" is turned to the dial position "H", the signal-inputted circuit is electrically conductive. Then the input signal control unit acquires the input signal and the processing unit processes the output signal from the input signal control unit to generate a continuous driving signal. Thus, the continuous driving signal is outputted to the driving motor to actuate the driving motor to generate a continuous motion. Preferably, the rotation speed of the driving motor ranges from 10000 to 12000 rpm.

When the turning button switch "S" is turned to the dial position "L", the signal-inputted circuit is electrically conductive. Then the input signal control unit acquires the input signal and the processing unit processes the output signal from the input signal control unit to generate a discrete driving signal, such regular or irregular square waveform, in a step-by-step manner. Thus, the discrete driving signal is outputted to the driving motor to actuate the driving motor to generate discontinuous or step motion. Preferably, the driving motor is not an expensive servo motor or stepping motor, but a typical cost-effective motor. When the turning button switch "S" is turned to the high-speed dial position "H" of left side "LS" or right side "RS", the output signal from the processing unit is a continuous signal. Relatively, when the turning button switch "S" is turned to the low-speed dial position "L" of left side "LS" or right side "RS", the output signal from the processing unit is a discrete signal. The difference between left side "LS" and right side "RS" indicates the different rotation direction of the driving motor. When the turning button switch "S" is turned to the high-speed dial position "H" or low-speed dial position "L" of left side "LS", the driving circuit drives the motor in clockwise or counterclockwise direction. When the turning button switch "S" is turned to the high-speed dial position "H" or low-speed dial position "L" of right side "RS", the driving circuit drives the motor in counterclockwise or clockwise rotation direction. Person skilled in the art should note that the input signal control unit and processing unit also output a direction signal to control the rotation direction of the driving motor. Furthermore, the driving circuit further comprises a circuit protection module to protect driving motor from being damaged while the driving motor successively operates for a long period of time. Also, the components of the driving circuit are also protected from being damaged when the turning button switch is turned to position "0", the driving circuit is in cut-off position to stop to drive the driving motor.

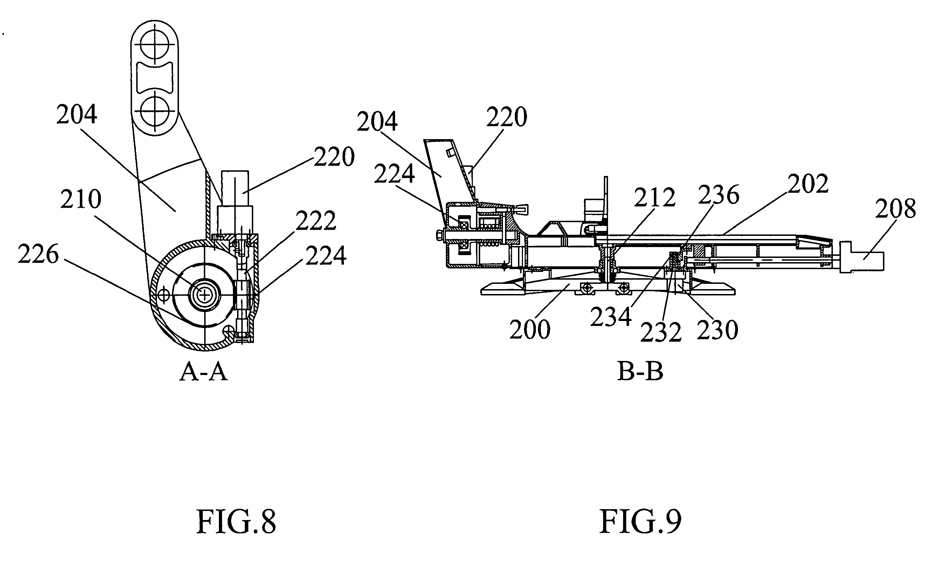

Please refer FIGs. 8 and 9. FIG. 8 is a partial cross-sectional view of a motion control device for controlling the movement of a bevel arm 204 along line A-A in FIG. 5 according to one embodiment of the present invention. FIG. 9 is a partial cross-sectional view of a rotation control device for controlling the movement of a turntable 202 along line (B-B) in FIG. 6 according to one embodiment of the present invention.

The movement-adjusting motor is located in the bevel arm 204 adjacent to the turntable 202. The output pivot 222 of the movement-adjusting motor 220 has a gear 224 and an engaged gear 226 engaged with the gear 224 is located in the turntable 202 and pivotally arranged to the pivot 210 in a co-axial manner. When the control switch 101 is turned to the dial position "H" of left side "LS", the movement-adjusting motor 220 receives a continuous signal and rotates in counterclockwise direction so that gear 224 connected to the output pivot 222 starts to rotate. Because the engaged gear 226 is located in the turntable 202, the gear 224 is engaged with the gear 226 and concurrently rotates along the external circumstance of the gear 226. That is, the gear 224 generates a revolution around the gear 226 while the gear 224 is driven by the motor 220 to revolve itself. The gear 226 carries the bevel arm 204 installed with the motor 220 while the gear 226 bevels in counterclockwise manner. The bevel arm 204 generates a great displacement relative to the turntable 202. Therefore, the position of the bevel arm 204 of the bench-top power tool can rapidly be moved for adjustment. When the control switch 101 is turned to slow dial position "L" of left side "LS", the motor 220 receives the discrete signal from the driving circuit and start to slowly rotate in counterclockwise manner. When the gear 224 slowly rotates along the external circumstance of the gear 226 in counterclockwise manner, a few amount of displacement between the bevel arm 204 and turntable 202 is generated. The bevel arm 204 generates a great displacement relative to the turntable 202. Therefore, the position of the bevel arm 204 of the bench-top power tool can slowly be moved for fine adjustment. Similarly, when the control switch 101 is turned to the slow dial position "L" or the fast dial position "H" of right side "RS", the bevel arm 204 generates a fast or slow rotation relative to them turntable 202 in clockwise manner. It is not be given unnecessary details here. Because the gears (224, 226) are a gear set and engaged together, the gears (224, 226) can lock each other when the bevel arm 204 stops to rotate. As a result, there is no need additional locking device to lock the engaged gear set. In operation, while operating the control switch 101, user sets a correct direction and an initial angular degree of the bevel arm 204 relative to the turntable 202. The control switch 101 is turned to fast dial position "H" of left side "LS" or right side "RS" so that the bevel arm 204 can rapidly rotate in responsive to the turntable 202. Corresponding to the dial scale on the surface behind the turntable 202, the control switch 101 is turned to the slow dial position "L" when the bevel arm 204 is approximate to the setup angular degree. Meanwhile, the bevel arm 204 slowly rotates and orientate to the setup angular degree value. The control switch 101 is released when the bevel arm 204 precisely arrives at the setup angular degree value. Thus, the position of the bevel arm 204 of the bench-top power tool is correctly controlled. During the rotation operation of the bevel arm 204, the control switch 101 can be adjusted to the slow dial position "L" in an inverse rotation direction so that the bevel arm 204 orientates to the setup angular degree value and stops at correct position when angular degree of the bevel arm 204 exceeds the setup angular degree value. Person skilled in the art should be noted that the motor 220 and the gear 224 are positioned in the turntable 202. The gear 226 is connected to the bevel arm 204 and co-axially connected to the pivot 210. The motor 220 rotates gear 224 connected to the output pivot 222 and, thus, the gear 226 engaged with gear 224 can pivotally rotate the pivot 210. Due to the connection between the gear 226 and the bevel arm 204, the bevel arm 204 has a bevel movement relative to the turntable 202. When receiving varied continuous and discrete signals having the different rotation directions, the motor 220 generates continuous or step periodic motion having the different rotation directions. The bench-top power tool is fast or slowly adjusted in different directions. The transmission assembly is composed of engaged gears (224, 226). Preferably, transmission assembly is gear and rack, a worm gear and worm shaft, a belt wheel, and a chain. Additionally, when the transmission assembly cannot be locked in a setup position, a locking device is proposed to lock the transmission assembly on the setup position.

The movement-adjusting motor 230 is located in base unit 200. The output pivot 232 of the movement-adjusting motor 230 has a gear 234 and an engaged rack 236 engaged with the gear 234 is located in the base unit 200. When the control switch 102 is turned to the dial position "H" of left side "LS", the movement-adjusting motor 230 receives a continuous signal and rotates in counterclockwise direction so that gear 234 connected to the output pivot 232 starts to rotate. Because the engaged gear 234 is located in the turntable 202, the gear 234 engaged with the rack 236 rapidly rotates in a counterclockwise direction. Therefore, the position of the turntable 202 of the bench-top power tool can rapidly be moved for adjustment.

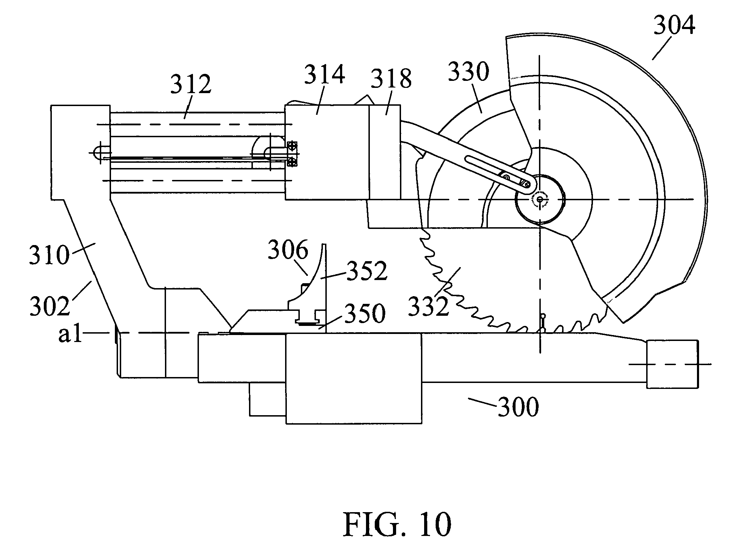

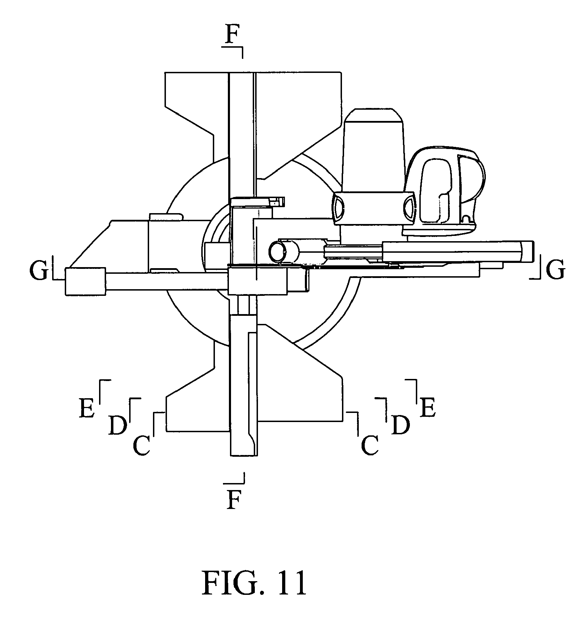

Please refer to FIGs. 10 and 11. FIG. 10 is a lateral view of a miter saw machine according to one embodiment of the present invention. FIG. 11 is a vertical view of the miter saw machine according to one embodiment of the present invention. The miter saw machine comprises a base unit 300, a support device 302 and a fence assembly device 306 both connected to the base unit 300, a saw device 304 connected to the support device 302. The support device 302 comprises a bracket 310 connected to a first pivot (a1) of the base unit 300, a guiding member 312 fixedly connected to the support device 302, and a sliding block 314 mounted slidably on the guiding member 312. The end portion of the guiding member 312 has a stop unit 318. The saw device comprises a guard unit 330 connected to a second pivot (a2) of the sliding block 314. A primary motor (not shown) drives and rotates a blade 332 partially covered by the guard unit 330. The fence assembly device 306 comprises a fixed fence 350 connected to the base unit 300 and a movable fence 352 movably connected to the fixed fence 350. The movement-adjusting motor is used to reciprocally drive the movable fence 352 on the moving fixed fence 350 to generate a relative sliding motion in relation to the base unit 300. The movable part unit is a saw device, a fence assembly device, a sliding unit including the guiding member and sliding block, or any combination thereof.

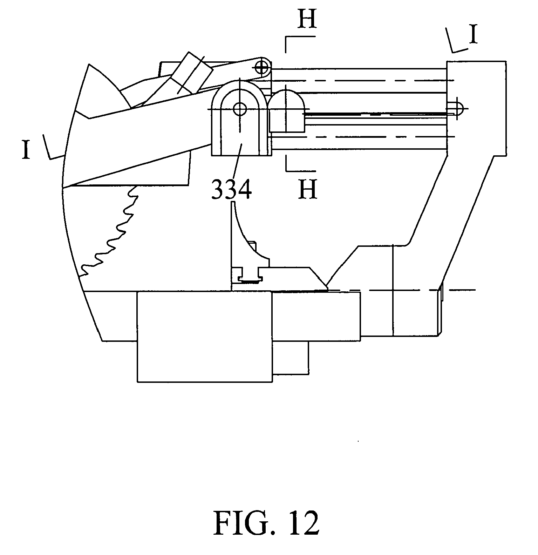

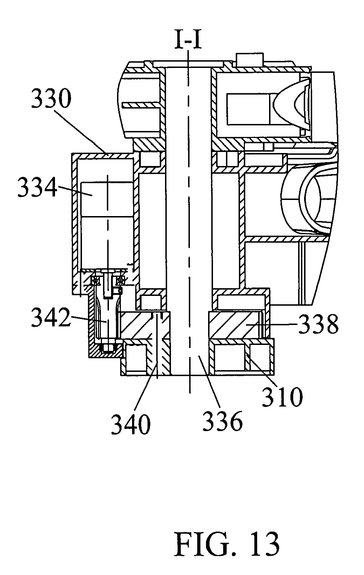

Please refer to FIGs. 12 and 13. FIG. 12 is another partial lateral view in relation to FIG. 10 of a miter saw machine according to one embodiment of the present invention, wherein a movement-adjusting motor pivotally bevels the saw device about a rotation pivot thereof in relation to the base unit according to one embodiment of the present invention. FIG. 13 is a partial cross-sectional view of the miter saw machine along line (I-I) in FIG. 12 according to one embodiment of the present invention, wherein the movement-adjusting motor pivotally bevels the saw device about a rotation pivot thereof in relation to the base unit.

In one embodiment, the miter saw machine further comprises a movement-adjusting motor 334 located within a guard unit 330. The saw device 304 and two end portions of the rotatable pivot 336 of supporting device 302 are pivotally connected to the bracket 310. The guard unit 330 is pivotally connected to the rotatable pivot 336 and a gear 338 is mounted on the rotatable pivot 336. The gear 338 is fixedly connected to the supporting device 302 via the orientation pin 340. The output shaft 342 of the movement-adjusting motor 334 is engaged with the gear 338. When the saw device 304 is cutting a workpiece, a control switch (not shown) is pressed and then the output shaft 342 of the movement-adjusting motor 334 rotates about the circumferential of the gear 338 such that the saw device 304 pivots on the supporting device 302.

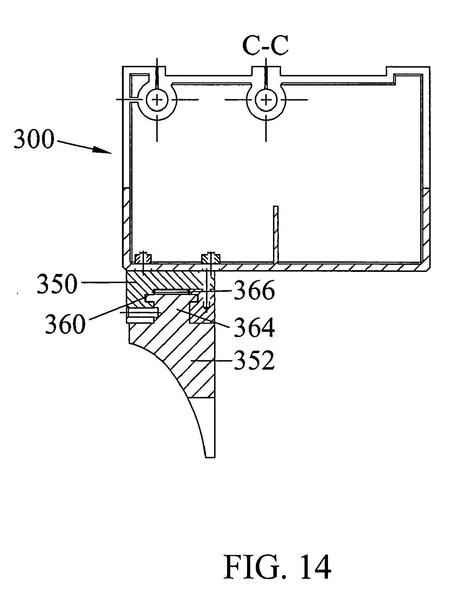

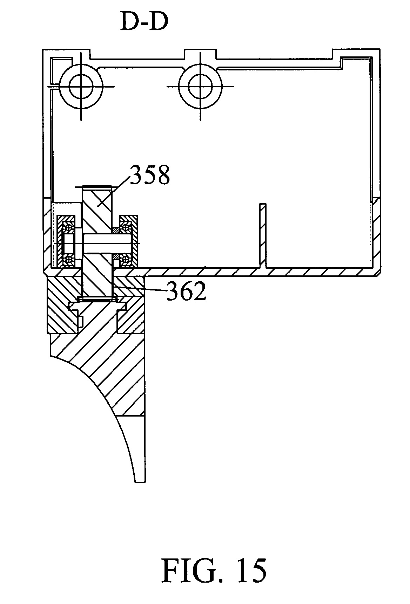

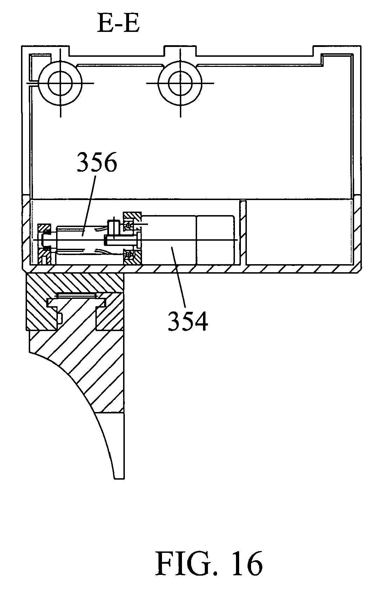

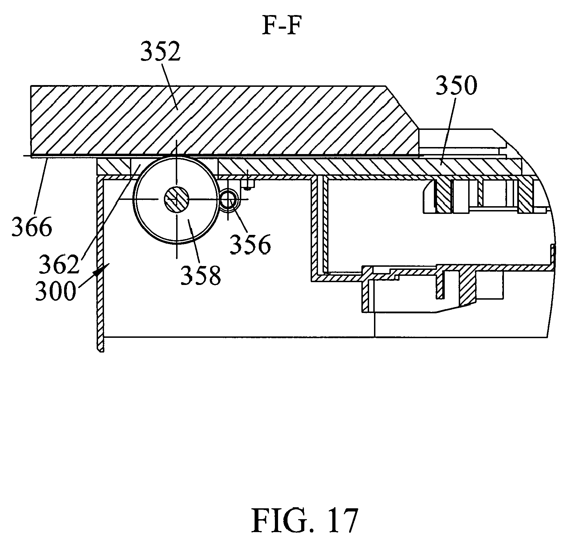

Please refer to FIGs. 14 to 17. FIG. 14 is a cross-sectional view of the miter saw machine along line (C-C) in FIG. 11 according to one embodiment of the present invention, wherein the movement-adjusting motor drives a movable fence to generate a relative sliding motion in relation to a fixed fence of the miter saw machine. FIG. 15 is a cross-sectional view of the miter saw machine along line (D-D) in FIG. 11 according to one embodiment of the present invention, wherein the movement-adjusting motor drives a movable fence to generate a relative sliding motion in relation to a fixed fence of the miter saw machine. FIG. 16 is a cross-sectional view of the miter saw machine along line (E-E) in FIG. 11 according to one embodiment of the present invention, wherein the movement-adjusting motor drives a movable fence to generate a relative sliding motion in relation to a fixed fence of the miter saw machine. FIG. 17 is a cross-sectional view of the miter saw machine along line (F-F) in FIG. 11 according to one embodiment of the present invention, wherein the movement-adjusting motor drives a movable fence to generate a relative sliding motion in relation to a fixed fence of the miter saw machine.

In one embodiment, the miter saw machine further comprises a movement-adjusting motor 354 fixedly connected to the base unit 300. A groove 360 and a through hole are vertically positioned on a fixed fence 350 steadily connected to the base unit 300. A convex 364 positioned on the movable fence 352 is movable and engaged with the groove 360. The end surface of the convex 364 further comprises a lateral rack 366 so that the movement-adjusting motor 354 is engaged with the rack 366 via gears (356, 354). When necessarily adjusting the position of the movable fence 352, the control switch (not shown) of the movement-adjusting motor 354 is actuated such that the movement-adjusting motor 354 drives the movable fence 352 in relation to the fixed fence 350.

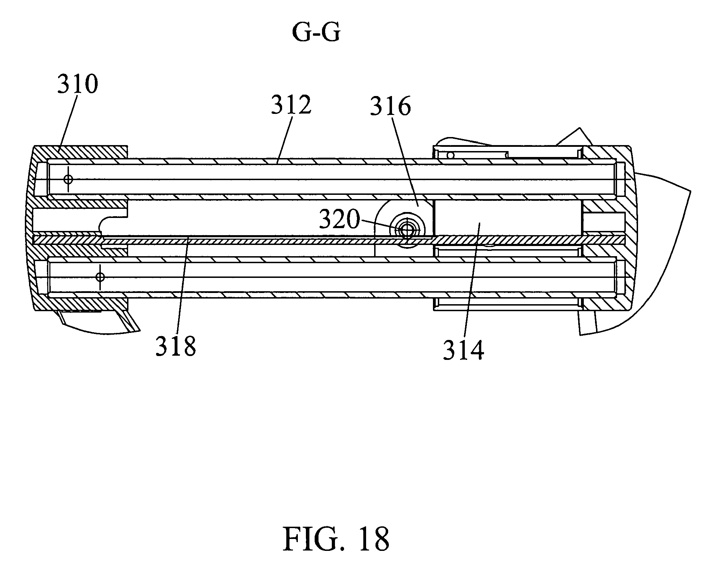

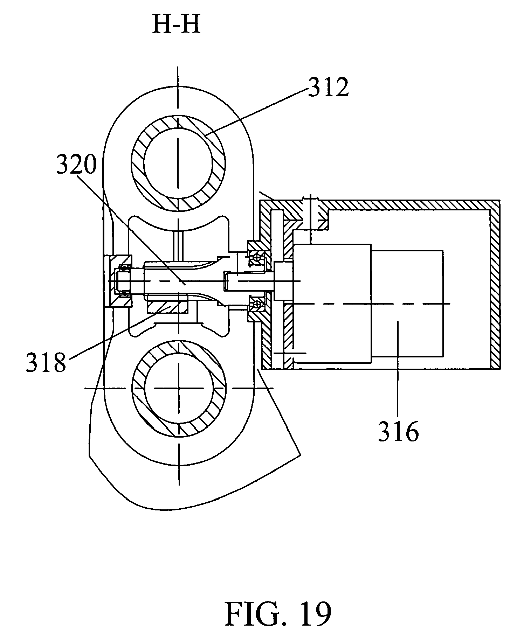

Please refer to FIGs. 18 and 19. FIG. 18 is a cross-sectional view of the miter saw machine along line (G-G) in FIG. 11 according to one embodiment of the present invention, wherein the movement-adjusting motor drives the saw device to slide the saw device by using via a sliding unit, movable on a guiding member, in relation to the base unit. FIG. 19 is a cross-sectional view of the miter saw machine along line (H-H) in FIG. 12 according to one embodiment of the present invention, wherein the movement-adjusting motor drives the saw device to slide the saw device by using via a sliding unit, movable on a guiding member, in relation to the base unit.

In one embodiment, the miter saw machine further comprises a movement-adjusting motor 316 fixedly connected to the sliding block 314. A rack 318 is parallel to the guiding member 312 and two end portions of the guiding member 312 are steadily positioned on both the bracket 310 and stop (shown in FIG. 10) 310. The output shaft 320 of the movement-adjusting motor 316 is engaged with rack 318 so that the movement-adjusting motor 316 drives the sliding block 314 to slide reciprocally the sliding block 314 on the guiding member 312.

According to the present invention, that both the movement-adjusting motor drives the saw device 304 to rotate the saw device 304 about the first pivot (a1) of the supporting device 302 and the movement-adjusting motor 354 drives the moveable fence 352 to move the moveable fence 352 in relation to the fixed fence 350 can applicable to a sliding miter saw machine and a fixed miter saw machine. In one embodiment, when the movement-adjusting motor 316 is positioned within the supporting device 302, the rack 318 may be located on the guiding member 312 or parallel to both the guiding member 312 and the saw device. Thus, the output shaft 320 of the movement-adjusting motor 316 is engaged with the rack 318 so that the saw device is driven to generate a relative sliding motion in relation to the supporting device 302. In another embodiment, when the movement-adjusting motor 316 is positioned within the base unit 300, the rack 318 may be directly located on the guiding member 312 or parallel to both the guiding member 312 and the saw device. Thus, the output shaft 320 of the movement-adjusting motor 316 is engaged with the rack 318 so that the supporting device 302 and the saw device is driven together to generate a relative sliding motion in relation to the base unit 300.

Person skilled in the art should be noted that the movement-adjusting motor drives the saw device 304 to rotate pivotally about the second pivot (a2) of the supporting device 302, the movement-adjusting motor 354 drives the movable fence 352 to move the movable fence 352 in relation to the fixed fence 350, and the movement-adjusting motor 334 drives the saw device 304 to slide the saw device in relation to the base unit 300 may be respectively or simultaneously utilized in the miter saw machine.

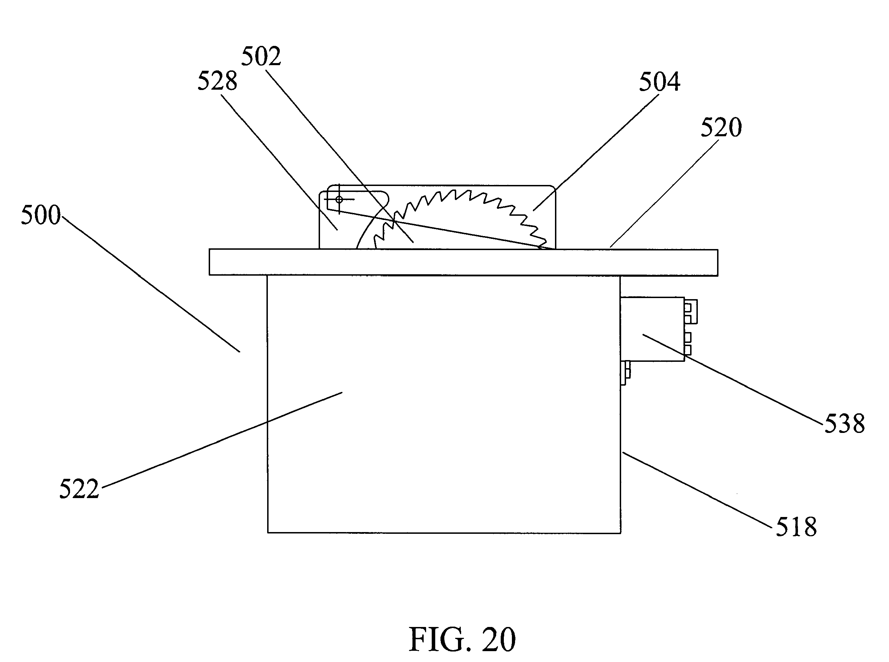

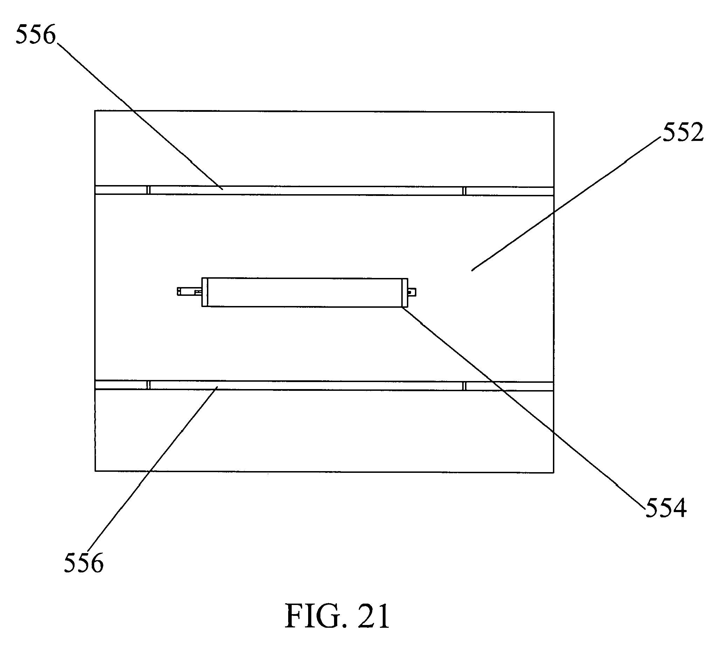

Please refer FIGs. 20 and 21. FIG. 20 is a lateral view of a bench-top saw machine according to one embodiment of the present invention. FIG. 21 is a vertical view of a bench-top saw machine according to one embodiment of the present invention. The bench-top power tool comprises a base unit, a movable part unit (shown in FIG. 3), a primary motor (shown in FIG. 3) and a movement-adjusting motor (shown in FIG. 3). The movable part unit connected to the base unit is capable of moving in relation to the base unit. The primary motor connected to the base unit is used to rotate a blade for cutting a workpiece. The movement-adjusting motor connected to the base unit and controlled by an open control mechanism drives the movable part unit to generate a relative motion in relation to the base unit.

The bench-top saw machine further comprises a bevel bracket connected to the base unit and the blade wherein movement-adjusting motor drives the bevel bracket to bevel the bevel bracket in relation to the base unit. The bench-top saw machine further comprises a bevel bracket connected to the base unit and a bearing board located on the bevel bracket wherein the bearing board is movable in relation to the bevel bracket, and wherein movement-adjusting motor drives the bearing board to generate a relative motion in relation to the base unit.

In one embodiment, the base unit 518 has a containing space 522 and a rectangular working table 520 is located on the base unit 518. The base unit 518 is used to support the rectangular working table 520. Furthermore, the rectangular working table 520 comprises a working region 552 having a slender slot 554 therein. The blade 502 is located in the containing space 522 and extends from the slender slot 554.

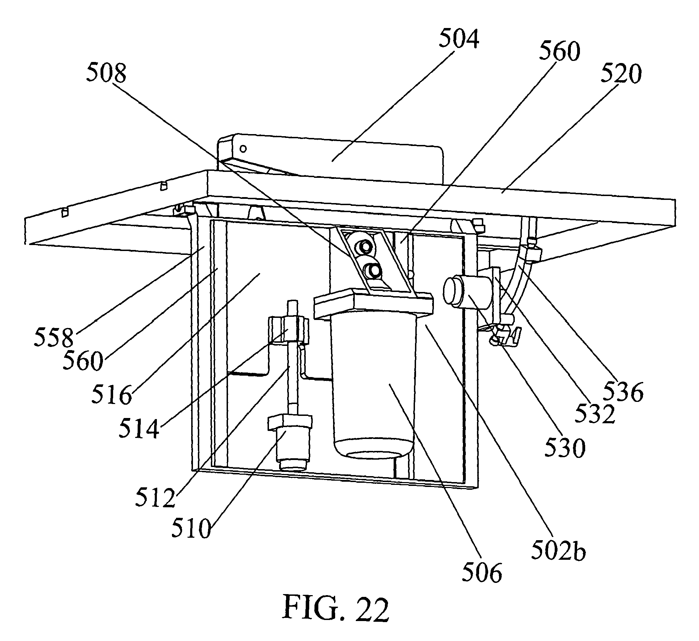

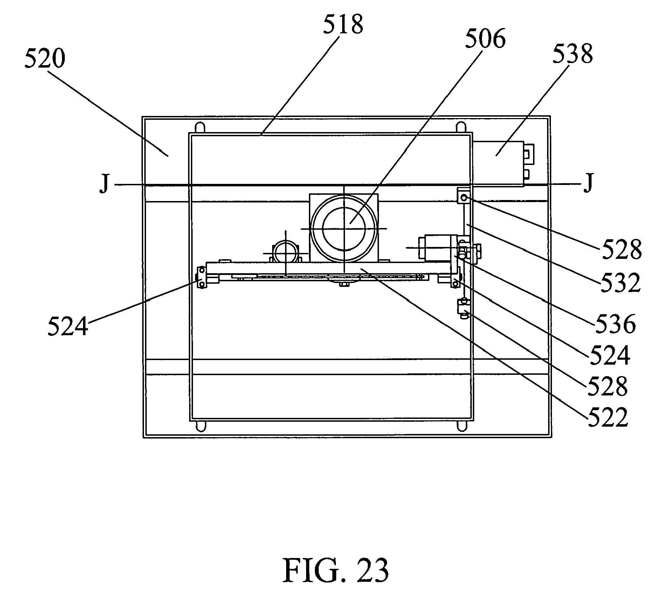

Please refer FIGs. 22 and 23. FIG. 22 is a perspective view of a miter saw machine according to one embodiment of the present invention. FIG. 23 is an upward view of a miter saw machine according to one embodiment of the present invention. A bevel bracket 558 is located in a working table 520 and the bevel bracket 558 is pivotally connected to the working table 520 by using a connecting bracket part 524 under the working table 520. Thus, the bevel bracket 558 pivotally rotates about the pivot of the working table 520. The bevel bracket 558 is connected to a transverse bearing block 532 and a bevel control mechanism is fixed positioned on the transverse bearing block 532. The end portion of the output shaft 512 of the movement-adjusting motor (530, 510) has a small type of gear (not shown). A tray 536 is fixedly connected to a base of the bottom side of the working table 520 and the tray 536 is a bending component. The end portion of output shaft 534 of the movement-adjusting motor 530 is supported in the tray 536. In addition, a gear loop located in the surface region of the bending tray is engaged with a gear positioned in the output shaft 534 of the movement-adjusting motor 530. While the movement-adjusting motor 530 rotates, the gear positioned in the output shaft of the movement-adjusting motor 530 rotates in an engagement manner along the gear loop of the tray 536 so that both the transverse bearing block 532 connected to the movement-adjusting motor 530 and the bevel bracket 558 pivotally rotate about the pivot (not shown) of the working table 520. Similarly, by controlling the bevel status of the movement-adjusting motor 530 from left side to right side or reversely, the rotating direction of the movement-adjusting motor 530 can be changed in order to adjust the bevel angle of the working face 552. That is, the movable part unit further comprises a bevel bracket 558 connected to the transmission assembly device and the movement-adjusting motor actuates the transmission assembly device to activate the bevel bracket 558 in order to generate an angular motion in relation to the working table 520.

It should be noted that the movement-adjusting motor 530 can be positioned on the working table 558. The gear loop located in the surface region of the bending tray is connected to the bevel bracket 558. The output shaft 534 of the movement-adjusting motor 530 has a small gear and a nut located on the bearing board. The gear loop is engaged with the small gear so that the bevel bracket 558 pivotally rotates about the pivot (not shown) of the working table 520. Thus, the saw device 502b bevels with working table 520 in order to generate the angular rotation movement of the blade 502 about working table 520. The primary motor drives the gear assembly device. A guard is located on the working table 520. In one embodiment, the movement-adjusting motor is a kind of general motor having an open loop control to save manufacturing cost of the power tool. In one embodiment, in FIGs 22 and 23, a runner is located in two lateral sides of the bevel bracket 148 and a bearing board is embedded in the runner 560 such that bevel bracket 148 slides upward and downward slides along the runner 560. Thus, the movement-adjusting motor connected to the transmission assembly device and activates the bevel bracket to adjust the height of the saw device. Further, the movable part unit is a saw device connected to the transmission assembly device and the movement-adjusting motor actuates the transmission assembly device to activate the saw device in order to generate a relative motion in relation to the working table.

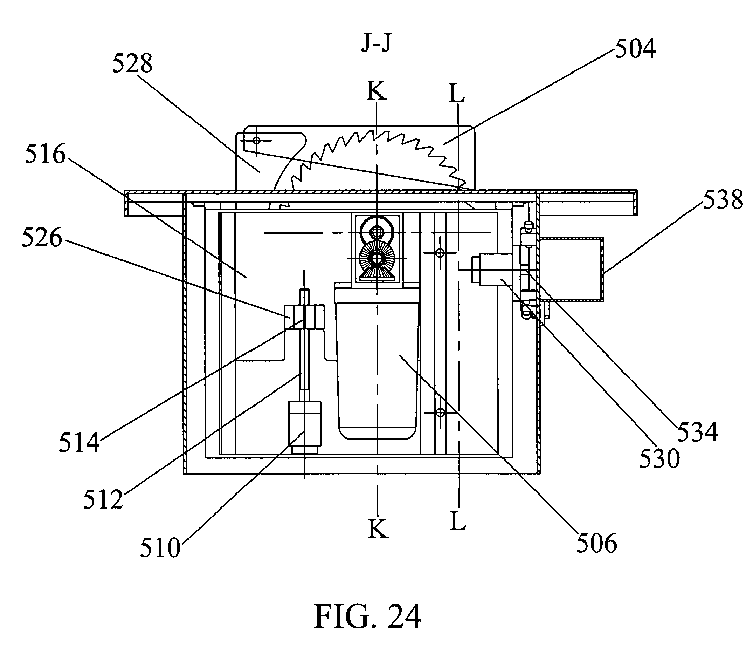

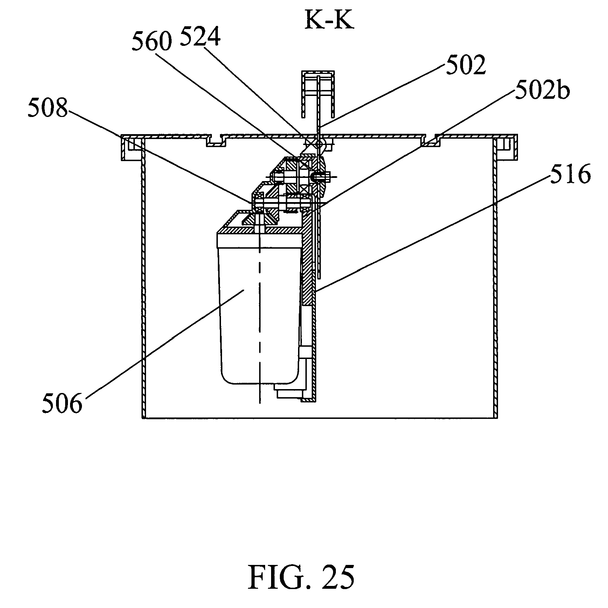

Please refer FIGs. 24 and 25. FIG. 24 is a cross-sectional view of the miter saw machine along line (J-J) in FIG. 23 according to one embodiment of the present invention. FIG. 25 is a cross-sectional view of the miter saw machine along line (K-K) in FIG. 24 according to one embodiment of the present invention.

The saw device 502b is positioned on the bearing board 516. The saw machine 502b comprises a primary motor 506 and a gear assembly device 508 which transmits the rotating torque of the primary motor 508. The blade 502 is located in the end portion of the output shaft of the primary motor 508. The bearing board 516 slides upward and downward along the two runners 560 of the bevel bracket 558. The primary motor 508 is adapted to the bearing board 516 to generate upward and downward motion. The primary motor 508 is controlled by a switch control mechanism 538. In one embodiment, the primary motor 508 is either motor operated by an open loop or a servo motor on basis of different control mechanism.

A raising and lowering control device controls the bearing board 516 to generate upward and downward sliding motion along the runners 560 such that the saw device positioned in the bearing board 516 and the bearing board 516 generate upward and downward motion. Consequently, the blade 502 connected to the saw device generates linear displacement in relation the working table 520. Preferably, the raising and lowering control mechanism comprises a raising and lowering motor, i.e. movement-adjusting motor 510 in the vertical direction. The movement-adjusting motor 510 includes an output shaft 512 having a thread and a nut 514 is coupled to the output shaft 512. An engaged assembly on the bearing board 516 is engaged with the nut 514. When the movement-adjusting motor 510 is driven, the nut 514 connected to the threaded output shaft 512 generates vertical displacement in relation to the output shaft 512.

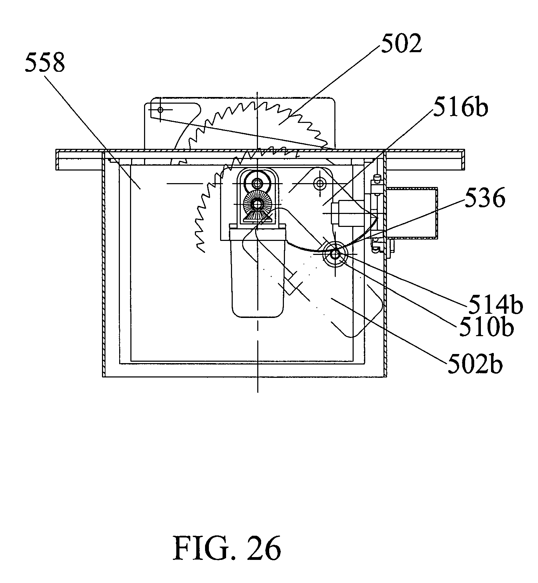

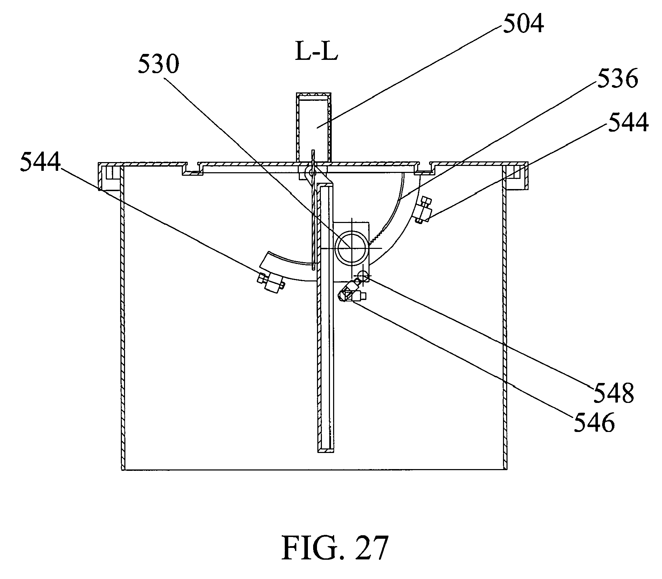

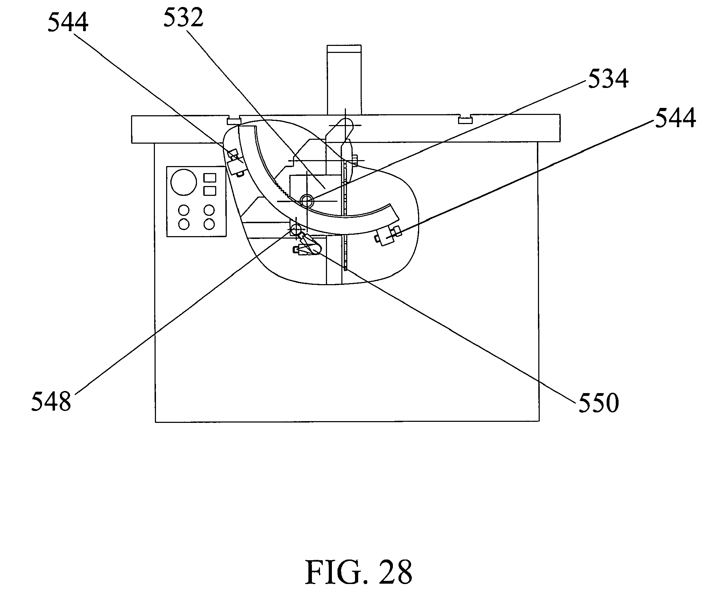

Please refer FIGs. 26, 27 and 28. FIG. 26 is another cross-sectional view of the miter saw machine in FIG. 24 according to another embodiment of the present invention. FIG. 27 is a cross-sectional view of the miter saw machine along line (L-L) in FIG. 25 according to one embodiment of the present invention. FIG. 28 is a partial front cross-sectional view of the miter saw machine according to one embodiment of the present invention.

When the bearing board 516 sliding in the bevel bracket 558 is removed, the saw device can generate a vertical height displacement in relation to the working table 520 so that the blade 502 produces raising and lowering motion in relation to the working region of the working table 520. For example, a pivot is connected to a bevel board 516b and the bevel bracket 558. The saw device 502b is positioned on the bevel board 516b having a curve shape gear 536b. The output shaft of the raising and lowering motor 510b connected to the bevel bracket comprises a small gear 514b which is engaged with the curve shape gear 536b. When the raising and lowering motor 510b is driven, the small gear 514b rotates along the curve shape gear 536b in order to pivotally rotate about the bevel bracket 558. Thus, the bevel board 516b positioned in the saw device 502b pivotally rotate about the working table 520 so that the blade generates linear displacement in relation to the height of the working table 520.

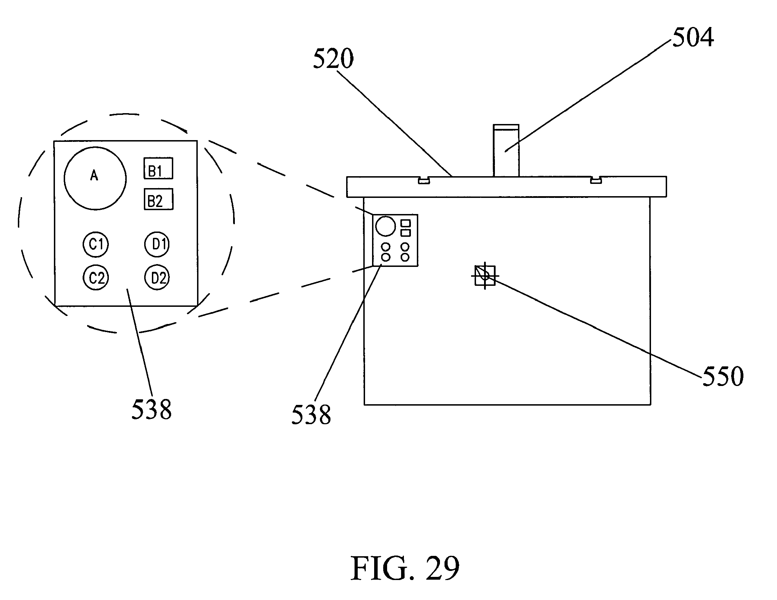

The transverse bearing block 532 has a protruding pole 548 extending from output shaft 534 of the motor to curved bottom surface of the tray 536. The bevel stop parts 544 are located on the tray 536. When the bevel motor 530 is driven, the gear on the output shaft of the bevel motor 530 rotates along the tray 536 and the bevel bracket 558 bevels in relation to the working table 520. An operation part 546 on the base unit 500 extends to a short shaft (not shown) of an opening in the base unit 500 and is connected to a dialing part 550. The dialing part 550 rotates pivotally rotates about the short shaft. FIG. 29 is both partial cross-sectional and front views of the miter saw machine according to one embodiment of the present invention.

To summarize, the advantages of the present invention generally include: (a) low manufacturing cost; (b) easy to operate; (c) convenient to adjust; and (d) time-saving.

As is understood by a person skilled in the art, the foregoing preferred embodiments of the present invention are illustrative rather than limiting of the present invention. It is intended that they cover various modifications and similar arrangements be included within the spirit and scope of the appended claims, the scope of which should be accorded the broadest interpretation so as to encompass all such modifications and similar structure.

## Claims

1. A bench-top power tool, comprising:
a base unit (100);
a movable part unit (102) connected to the base unit (100), capable of moving in relation to the base unit (100);
a primary motor (104) connected to the base unit (100), rotating a blade (108) to cut a workpiece; and
a movement-adjusting motor (106) connected to the base unit (100) and controlled by an open control mechanism, driving the movable part unit (102) to generate a relative motion in relation to the base unit (100).

2. The bench-top power tool of claim 1, wherein the movement-adjusting motor (106) is connected to the movable part unit (102) via a transmission assembly device (110).

3. The bench-top power tool of claim 1, wherein the movement-adjusting motor (106) is one selected from a group consisting of a permanent magnet direct-current (DC) driving motor, a serial motor and a single-phase induction motor.

4. The bench-top power tool of claim 1, further comprising a signal-transforming device (112) for receiving an input signal wherein the signal-transforming device (112) transforms the input signal into a driving signal to drive the movement-adjusting motor (106).

5. The bench-top power tool of claim 4, wherein the signal-transforming device (112) transforms the input signal into either a continuous or discrete signal and outputs either the continuous or discrete signal into the movement-adjusting motor.

6. The bench-top power tool of claim 5, wherein the signal-transforming device (112) comprises:
an input signal control unit (114) for generating the input signal; and
a signal processing unit (116) connected to the signal-inputted control unit (114) for receiving the input signal and transforming the input signal into either a continuous or discrete signal and outputs either the continuous or discrete signal into the movement-adjusting motor (106).

7. The bench-top power tool of claim 6, wherein the input signal control unit (114) is a control switch and the signal processing unit (116) is a central processing unit connected to the control switch.

8. The bench-top power tool of claim 7, wherein the input signal control unit (114) comprises one of a fast control switch, a slow control switch and the combination.

9. The bench-top power tool of claim 8, wherein while the fast control switch is turned, the central processing unit transforms the input signal into a continuous signal and outputs the continuous signal into the movement-adjusting motor (106) to drive rapidly the movement-adjusting motor (106), and while the slow control switch is turned, the central processing unit transforms the input signal into a discrete signal and outputs the discrete signal into the movement-adjusting motor (106) to drive slowly the movement-adjusting motor (106).

10. The bench-top power tool of one of claims 1-9, wherein the bench-top power tool is a miter saw machine.

11. The bench-top power of claim 10, further comprising a movable fence (352) wherein the movement-adjusting motor (106) drives the movable fence (352) to generate a relative sliding motion in relation to the base unit (100, 200).

12. The bench-top power of claim 10, further comprising a bevel arm (204) connected to the blade (108) wherein the movement-adjusting motor (106) drives the bevel arm (204) to generate a relative bevel motion in relation to the base unit (100, 200).

13. The bench-top power of claim 10, further comprising a turntable (202) connected to the base unit (100, 200) wherein the movement-adjusting motor (106) drives the turntable (202) to generate a relative rotation motion in relation to the base unit (100, 200).

14. The bench-top power of claim 10, further comprising a supporting device (302) and a saw device (304) connected to a pivot (a1) of the supporting device (302) wherein the movement-adjusting motor (106) drives the saw device (304) to rotate the saw device (304) about the pivot (a1) of the supporting device (302) in relation to a pivot of the base unit (100, 300).

15. The bench-top power of claim 10, further comprising a sliding unit (312, 314) and a saw device (304) connected to the sliding unit (314, 312) wherein the movement-adjusting motor (106) drives the saw device 304 to slide in relation to the base unit (100, 300).

16. The bench-top power tool of one of claims 1-9, wherein the bench-top power tool is a bench-top saw machine.

17. The bench-top power of claim 16, further comprising a bevel bracket (558) connected to the base unit (100, 500) and the blade (108) wherein movement-adjusting motor (106) drives the bevel bracket (558) to bevel the bevel bracket (558) in relation to the base unit (100, 500).

18. The bench-top power of claim 16, further comprising a bevel bracket (558) connected to the base unit (100, 500) and a bearing board (516) located on the bevel bracket (558) wherein the bearing board (516) is movable in relation to the bevel bracket (558), and wherein movement-adjusting motor (106) drives the bearing board (516) to generate a relative motion in relation to the base unit (100, 500).
